# EUROPEAN PATENT APPLICATION

(11) **EP 4 191 527 A1**
(43) Date of publication of application: **07.06.2023**
(21) Application number: 21212323.6
(22) Date of filing: 03.12.2021
(51) Int. Cl.: G06T 7/73

(54) **AN ENDOSCOPE IMAGE PROCESSING DEVICE**

(71) Applicant: Ambu A/S, 2750 Ballerup (DK)
(72) Inventor: ALONSO DÍAZ, Alejandro, 2750 Ballerup (DK); GADE, Josefine Dam, 1973 Frederiksberg (DK); JØRGENSEN, Andreas Härstedt, 2610 Rødovre (DK); LASSEN, Lee Herluf Lund, 2760 Måløv (DK); YU, Dana Marie, 2750 Ballerup (DK)
(74) Representative: AWA Denmark A/S

(57) **Abstract**

Disclosed is a method of recognising previously observed locations during an endoscopic procedure. The method comprises obtaining a stream of images from an image capturing device of an endoscope during the endoscopic procedure. The method further comprises, during the endoscopic procedure, building a database of previously observed locations based on images of the stream of images. Additionally, the method comprises continuously comparing images of the stream of images with the database of previously observed locations to determine if an image of the stream of images is recorded from a previously observed location. Further disclosed is an image processing device for recognising previously observed locations during an endoscopic procedure comprising a processing unit configured to perform the method, a display unit connectable to the processing unit, an endoscope system comprising an endoscope and the image processing device, and a computer program product.

## Description

### Field

The present disclosure relates to a method for recognising previously observed locations, an image processing device for recognising previously observed locations, a display unit, an endoscope system comprising an endoscope and an image processing device, and a computer program product.

### Background

Examination of human cavities, such as human airways, with an endoscope may be carried out to determine whether a patient has disease, a tumor, an infection, or the like, and in some cases samples may be taken/removed from or inserted into part of the human cavity. The endoscope typically comprises an image capturing device, such as a camera, at a distal end of the endoscope to be inserted into the patient and connected to a display so as to provide the medical personnel with a view of the part of the airways, in which the distal end of the endoscope is positioned.

Typically, when an endoscopic examination of a human cavity, i.e. an endoscopic procedure, is carried out, the medical personnel will need to search through various parts of the human cavity. This often includes moving the endoscope into a part of the human cavity and back to an earlier position to again move the endoscope into another part of the human cavity. For instance, human airways have a branched structure and when one branch of a branching has been examined, the endoscope will typically be retracted to a branching and subsequently moved from that branching moved into another branch of the branching. In other examinations, the endoscope may during an examination be re-inserted into a part of the human cavity, in which it has already been, to make further examination of the part of the human cavity.

Traditionally, when navigating the endoscope through the human cavity, the medical personnel often rely on experience to navigate the endoscope through the human cavity based on images from a camera of the endoscope. In the human cavities, such as human airways or a colon, various parts thereof often look identical, which may make it difficult for the medical personnel to identify the location of the endoscope in the human cavity. This increases the risk that a patient is not properly examined.

Systems have been developed to assist the medical personnel in navigating the endoscope through the human cavity. However, such systems often rely on external devices, such as echo devices, which again increases the complexity of the examination as a such further device must be controlled along with the endoscope.

On this background, it is desirable to provide a method and an image processing device, which at least mitigates some of the above-mentioned drawbacks.

### Summary

A first aspect of the present disclosure relates to a method of recognising previously observed locations during an endoscopic procedure comprising:
obtaining a stream of images from an image capturing device of an endoscope during the endoscopic procedure;
during the endoscopic procedure, building a database of previously observed locations based on images of the stream of images;
continuously comparing images of the stream of images with the database of previously observed locations to determine if an image of the stream of images is recorded from a previously observed location.

It has been realised that it is beneficial during an endoscopy to recognise whether an image is recorded at or near a previously observed location. Thereby, an improved navigation of the endoscope during the endoscopic procedure may be allowed for as the operator upon arrival at a location may be provided with information as to whether the location has been reached before during the procedure based on the images. This, again, may allow the operator to base the navigation of the endoscope accordingly, such as in which direction the endoscope is to be moved from the previously visited position to perform the desired examination.

Furthermore, where the method is used with a method and/or system for determining a position of an endoscope based on images of the endoscope, the method may allow for an improved determination of the position as the system may with a higher probability correctly identify a previously observed location, thereby reducing the risk of an erroneous location determination of the endoscope.

A previously observed location may be a location, at which the endoscope has been at an earlier point in time during the examination and/or a location, which has been observed by the endoscope at an earlier point in time during the examination.

In some embodiments, obtaining images, building the database, and comparing the images may be performed simultaneously. In other embodiments, the obtaining may be performed prior to the building and/or comparing. Alternatively or additionally, the building of the database may be performed before the comparing and/or the building may be performed continuously. Alternatively or additionally, the stream of images may be obtained continuously.

Building a database may comprise generating one or more database entries. Each database entry may comprise and/or correspond to an endoscope location, such as a previous endoscope location. Alternatively or additionally, each database entry may comprise and/or correspond to an image. In some embodiments, each database entry comprises information about an endoscope location, such as an endoscope location, and information about one or more images, such as one or more images and/or a representation thereof.

The endoscope location may be a location of a tip part of an endoscope. Alternatively or additionally, the endoscope location may be a location of the endoscope in a human cavity and/or in a model of the human cavity. The endoscope location may be or indicate a segment of the human cavity.

In some embodiments, the method may be a computer-implemented method.

Alternatively or additionally, the method may further comprise outputting an output signal based on the determination of if an image of the stream of images is recorded from a previously observed location. In some embodiments, the output signal may indicate and/or comprise information regarding whether the image is determined to be recorded from a previously observed location. Alternatively or additionally, the output signal may indicate and/or comprise information about a previously observed location, such as a previously observed location, from which it is determined that the image is recorded. The output signal may be provided to a display unit, which may potentially indicate whether the image is recorded at a previously visited location. Alternatively or additionally, the output signal may comprise the stream of images.

The comparing may comprise providing the images to a machine learning data architecture trained to determine if an image is recorded from a previously observed location.

The machine learning data architecture may be a supervised machine learning architecture. The machine learning data architecture may be trained by obtaining a training data set comprising, for various locations, a plurality of endoscope images obtained at the respective location, and for each endoscope image having a human operator determine the location at which it has been obtained. Alternatively or additionally, the machine learning data architecture may be trained by obtaining a training data set comprising, for each location an image, potentially corresponding to an image of a database, and a plurality of endoscope images obtained at the respective location, and for each of the plurality of endoscope images having a human operator determine whether it is obtained at or near the location, at which the image of the location is obtained.

The machine learning data architecture may be a first machine learning data architecture.

In some embodiments, the comparing comprises reducing a dimensionality of the images of the stream of images and comparing the images of reduced dimensionality with the database.

By reducing the dimensionality and comparing these with the database, only the necessary features to perform the comparison may be represented in the reduced dimensionality image allowing for an improved comparison, e.g. where an image show the view of the human cavity at a previously visited location but with a slightly different section, cut, or angle.

The step of building the database may comprise reducing the dimensionality of an image and storing the image of reduced dimensionality in the database and/or database entries, such as each database entry.

The images may be dimensionality reduced by means of an autoencoder trained to encode the image to generate the image of reduced dimensionality. The autoencoder may be a self-supervised method that produces the same image as an input image. It may use an encoder configured to reduce the amount of information to a minimum and a decoder configured to recover the full size of the image using only the reduced information. In some embodiments, a representation of the image may contain compressed information of the original (input) image and a vector, called the Latent Space or Latent Space Representation, may be produced by the autoencoder. This vector may be used to compare different images and assign the probability of the different images being obtained at the same location.

Alternatively or additionally, the images may be dimensionality reduced using the (first) machine learning data architecture.

In some embodiments, the (first) machine learning data architecture is a Convolutional Neural Network (CNN). The CNN may be used to reduce the dimensionality of the input images. This neural network may be trained as a classification, segmentation, or object detection problem, potentially depending on the annotated data available. Features extracted by this network may also be a dimensional reduction of the original images. The features extracted from images may be features vectors. A feature vector may represent an image of reduced dimensionality. Differences of the feature vectors computed for different images may be used to assign the probability that images belong to the same location.

The images of reduced dimensionality may be a vector. The reduced dimensionality image need not represent the image, or at least not fully represent the image, but may comprise and/or represent elements and/or features from the image.

The reduced dimensionality images may be compared with the database, potentially vector to vector, so that a match and/or a distance between the reduced dimensionality images and a reduced dimensionality image of the database is/are determined. Where a match is determined and/or a distance between the reduced dimensionality images of the image stream and the database, respectively, is below a predetermined distance threshold, it may be determined that the image is obtained at a previously visited location.

The predetermined distance threshold may in some embodiments be determined based on a mean, mode, root mean square (RMS) of the distances between vectors. Alternatively or additionally, clustering algorithms, such as k-means clustering, may be used to determine whether a match can be determined between the reduced dimensionality images of the image stream and the database, respectively.

In some embodiments, the step of building the database comprises determining whether a predetermined position has been reached, wherein each previously observed location corresponds to a predetermined position and, where it is determined that the predetermined position has been reached, creating an entry in the database based on one or more images of the image stream.

Thereby, a position of the endoscope may be determined when the endoscope arrives at a previously visited location.

The predetermined position may a predetermined anatomic reference position. Alternatively or additionally, the predetermined position may be a predetermined position of a set of predetermined positions. Alternatively or additionally, the predetermined position may correspond to or may be a predetermined position in a model, such as a computer model of a human cavity, in which the endoscopic procedure is performed.

Where the endoscopic procedure is a bronchoscopic procedure, the predetermined position may be a furcation and/or a branching of a human airways, such as a branching between main bronchi, secondary bronchi, tertiary bronchi, alveoli, or the like.

In some embodiments, the determination whether a predetermined position has been reached comprises continuously analysing the recorded images of the stream of recorded images using a machine learning data architecture, the machine learning data architecture being trained to determine a set of anatomic reference positions, to determine if an anatomic reference position of a subset of anatomic reference positions, from the set of anatomic reference positions, has been reached.

Thereby the accuracy of the determination whether the predetermined position has been reached may be improved.

The machine learning data architecture may be trained by being provided with a training data set comprising a number, such as a large number, such as 100 or more, image streams, each potentially comprising a plurality of images, from an endoscope and having a human operator determine the predetermined anatomic reference position at which the images have been obtained. The training data set may comprise one or more images showing anatomic reference positions inside a human cavity, such as inside the human airways where the endoscopic procedure is a bronchoscopic procedure. The images may be from a video stream of an image device of an endoscope. The machine learning data architecture may be trained to optimise towards a F score, such as a F1 score or a Fβ, which it will be appreciated is well known in the art. The machine learning data architecture may be trained using the training data set and corresponding associated anatomic reference positions. Potentially, the anatomic reference positions may be associated by a plurality of people.

The machine learning data architecture trained to determine a set of anatomic reference positions, to determine if an anatomic reference position of a subset of anatomic reference positions, from the set of anatomic reference positions, has been reached. This machine learning data architecture may be a second machine learning data architecture. Alternatively, the machine learning data architecture may be the (first) machine learning data architecture trained to determine if an image is recorded from a previously observed location and further trained to determine a set of anatomic reference positions, to determine if an anatomic reference position of a subset of anatomic reference positions, from the set of anatomic reference positions, has been reached.

In some embodiments, the determination whether a predetermined position has been reached further comprises to continuously analyse the recorded images to determine if two or more lumens, potentially of a branching structure, are present in at least one of the recorded images. The determination whether two or more lumens are present may be carried out by the machine learning data architecture. Alternatively, the determination if two or more lumens are present in the at least one recorded image may be performed using a third machine learning architecture trained to detect lumens in an endoscope image.

In some embodiments, determining whether a predetermined position has been reached comprises where it is determined that two or more lumens are present in the at least one recorded image, estimating a position of the two or more lumens in a model of the human cavity, such as the human airways. The estimating the position may be performed using the machine learning architecture.

In some embodiments, the method may further comprise, in response to determining that two or more lumens are present in the at least one recorded image: determining which one of the two or more lumens the endoscope enters; and updating a determined endoscope position based on the determined one of the two or more lumens. In some embodiments, determining which one of the two or more lumens the endoscope enters may be performed by analysing, in response to a determination that two or more lumens are present in the at least one recorded image, a plurality of recorded images to determine a movement of the endoscope.

In some embodiments, building the database comprises evaluating a quality of an image of the image stream for use in the database and, in response to evaluating the quality to be above a predetermined threshold quality, generating a database entry based on the image.

Thereby the determination whether an image is obtained at a previously visited location may be have an increased robustness as the database may be based on high quality images, in turn reducing the risk of false positive and/or false negative determinations.

The evaluation of the quality may be performed by a machine learning data architecture trained to evaluate a quality of images.

The machine learning data architecture may be the same (first) machine learning data architecture used in determining if an image of the stream of images is recorded from a previously observed location, where a such is provided, and/or the same (second) machine learning data architecture used in determining whether a predetermined anatomic reference position has been reached. In some embodiments, the machine learning data architecture trained to evaluate a quality of images may be a fourth machine learning data architecture.

The machine learning data architecture may be trained by being provided with a training data set comprising a number, such as a large number, such as 100 or more, image streams, each potentially comprising a plurality of images, from an endoscope and having a human operator determine a quality of the images, such as whether it is above a predefined threshold and/or on a scale. The training data set may comprise one or more images showing anatomic reference positions inside a human cavity, such as inside the human airways where the endoscopic procedure is a bronchoscopic procedure. The images may be from a video stream of an image device of an endoscope.

A quality may be and/or may correspond to a suitability of the images for use in determining whether they are obtained at a previously visited location. The quality may be determined based on one or more of a light level, a contrast level, a blurriness, a sharpness, and/or a depth of focus. Alternatively or additionally, the quality may be determined based a recognisability of features from the image and/or from the number of recognisable features from the image.

In some embodiments, building the database comprises generating a database entry further based on one or more of an estimated endoscope location and an image smoothness.

Thereby, the database entry may be based on an image which has a suitable smoothness for comparing an image of the stream with the image of the database.

A smoothness may determined based on one or more of a frequency analysis, e.g. the frequency content of an image, an edge detection, and/or a contrast of the image.

In some embodiments, generating the database comprises generating a database entry, wherein the database entry is created based on a series of images and wherein the comparing comprises comparing a series of images from the stream of images with the database entry.

Thus, an improved determination, e.g. a reduction of the risk of false positives and/or false negatives, may be provided, as a plurality of images and potentially a time dimension thereof may be taken into account.

The series of images may comprise and/or be a plurality of images, such as a consecutive plurality of images and/or a stream of images.

The database entry/entries may be created based on a series of dimensionally reduced images and/or may comprise a series of dimensionally reduced images.

In some embodiments, the endoscopic procedure is a bronchoscopic procedure, such as a bronchoscopy.

In some embodiments, the endoscopic procedure may be a colonoscopic procedure, such as a colonoscopy.

A second aspect of the disclosure relates to an image processing device for recognising previously observed locations during an endoscopic procedure, said image processing device comprising a processing unit operationally connectable to an image capturing device of an endoscope, wherein the processing unit is configured to perform the method according to the first aspect.

The processing unit of the image processing device may be any processing unit, such as a central processing unit (CPU), a graphics processing unit (GPU), a microcontroller unit (MCU), a field-programmable gate array (FPGA), or any combination thereof. The processing unit may comprise one or more physical processors and/or may be combined by a plurality of individual processing units.

The processing unit may, where this is configured to perform a method using a machine learning data architecture, implement the machine learning data architecture, i.e. the processing unit may provide the image to the machine learning data architecture by processing the image using the machine learning data architecture. Alternatively, the processing unit may provide the image, a parameterized version of the image, or a dimensionally reduced version of the image to another processing unit e.g. outside of the image processing device, where said another processing unit implements the machine learning data architecture.

A third aspect of the disclosure relates to a display unit for displaying images obtained by an image capturing device of an endoscope, wherein the display unit comprises an image processing device according to the second aspect of the disclosure.

A fourth aspect of the disclosure relates to an endoscope system comprising an endoscope and an image processing device according to the second aspect, wherein the endoscope has an image capturing device and the processing unit of the image processing device is operationally connectable to the image capturing device of the endoscope.

In some embodiments, the endoscope system further comprises a display unit, the display unit being operationally connectable to the image processing device.

In some embodiments, the image processing device forms part of a display unit according to the third aspect.

A fifth aspect of the disclosure relates to a computer program product comprising program code means adapted to cause a data processing system to perform the steps of the method according to the first aspect, when said program code means are executed on the data processing system.

In some embodiments, the computer program product comprises a non-transitory computer-readable medium having stored thereon the program code means.

The different aspects of the present disclosure can be implemented in different ways including image processing devices, display units, endoscope systems, methods for estimating a quality measure, and computer program products described above and in the following, each yielding one or more of the benefits and advantages described in connection with at least one of the aspects described above, and each having one or more preferred embodiments corresponding to the preferred embodiments described in connection with at least one of the aspects described above and/or disclosed in the dependent claims. Furthermore, it will be appreciated that embodiments described in connection with one of the aspects described herein may equally be applied to the other aspects.

### Brief description of the drawings

The method and the image processing device will now be described in greater detail based on non-limiting exemplary embodiments and with reference to the drawings, of which:
FIG. 1a shows a perspective view of an endoscope in which a tip part assembly according to the present disclosure is implemented,
FIG. 1b shows a perspective view of a display unit to which the endoscope of FIG. 1a is connected,
FIG. 2 shows a flow chart of a method of recognising previously observed locations during an endoscopic procedure according to an embodiment of the disclosure,
FIG. 3 shows a schematic drawing of an image processing device according to an embodiment of the disclosure,
FIG. 4 shows a schematic drawing of an endoscope system according to an embodiment of the disclosure,
FIG. 5a shows a view of an image based on which a database entry is generated in a method according to an embodiment of the disclosure, and
FIG. 5b shows a view of an image which is compared with a database of previously observed locations in a method according to an embodiment of the disclosure.

### Detailed description

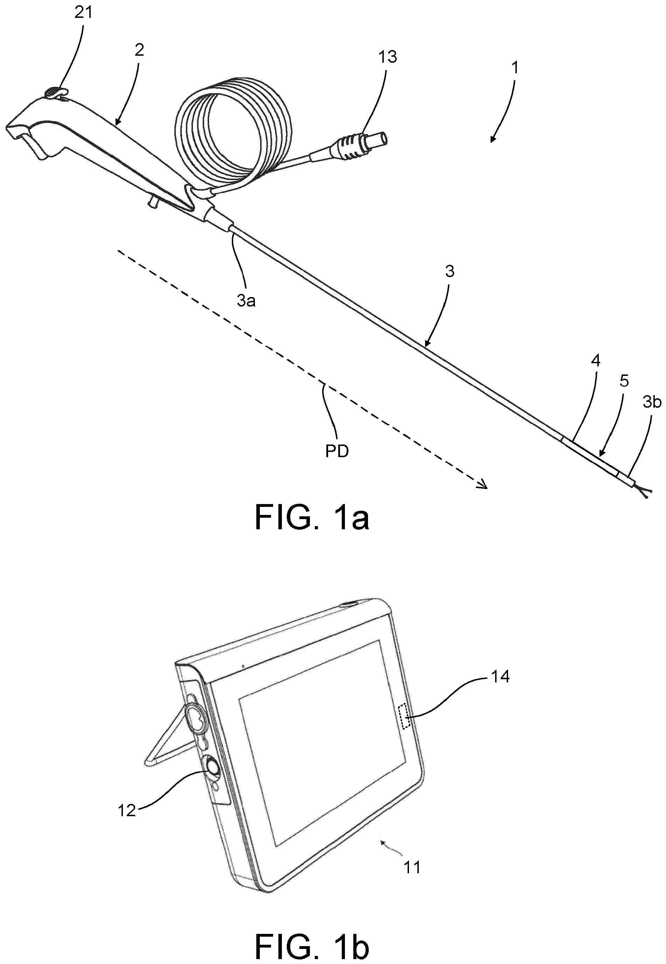

Referring first to FIG. 1a, an endoscope 1 is shown. In all embodiments, the endoscope may be disposable and may not be intended to be cleaned and reused. Alternatively the endoscope may, in all embodiments, be re-usable. The endoscope 1 comprises an elongated insertion tube 3. At the proximal end 3a of the insertion tube 3 an operating handle 2 is arranged. The operating handle 2 has a control lever 21 for manoeuvring a tip part assembly 5 at the distal end 3b of the insertion tube 3 by means of a steering wire. A camera assembly 6 is positioned in the tip part 5 and is configured to transmit an image signal through a monitor cable 13 of the endoscope 1 to a monitor 11.

In FIG. 1b, a display unit comprising a monitor 11 is shown. The monitor 11 may allow an operator to view an image captured by the camera assembly 6 of the endoscope 1. The monitor 11 comprises a cable socket 12 to which a monitor cable 13 of the endoscope 1 can be connected to establish a signal communication between the camera assembly 6 of the endoscope 1 and the monitor 11. The display unit further comprises an image processing device 14.

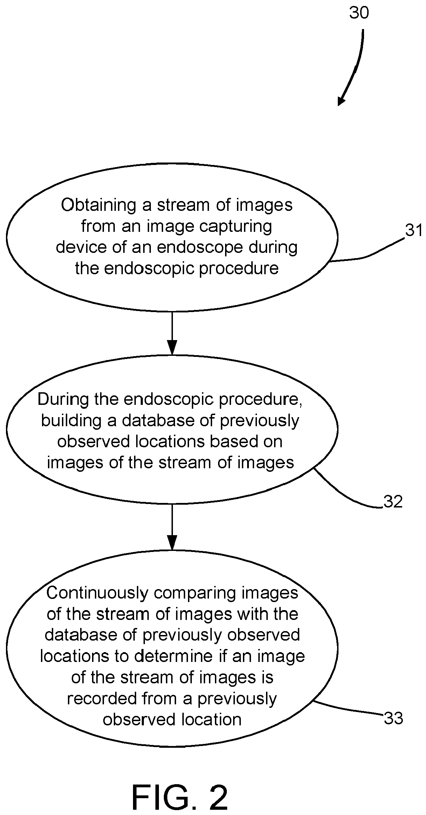

FIG. 2 shows a flow chart of a method 30 of recognising previously observed locations during an endoscopic procedure according to an embodiment of the disclosure.

The method 30 initiates at step 31 of obtaining a stream of images from an image capturing device of an endoscope during the endoscopic procedure. Next, in step 32, during the endoscopic procedure, a database of previously observed locations is built based on images of the stream of images. Then in step 33 images of the stream of images are continuously compared with the database of previously observed locations to determine if an image of the stream of images is recorded from a previously observed location.

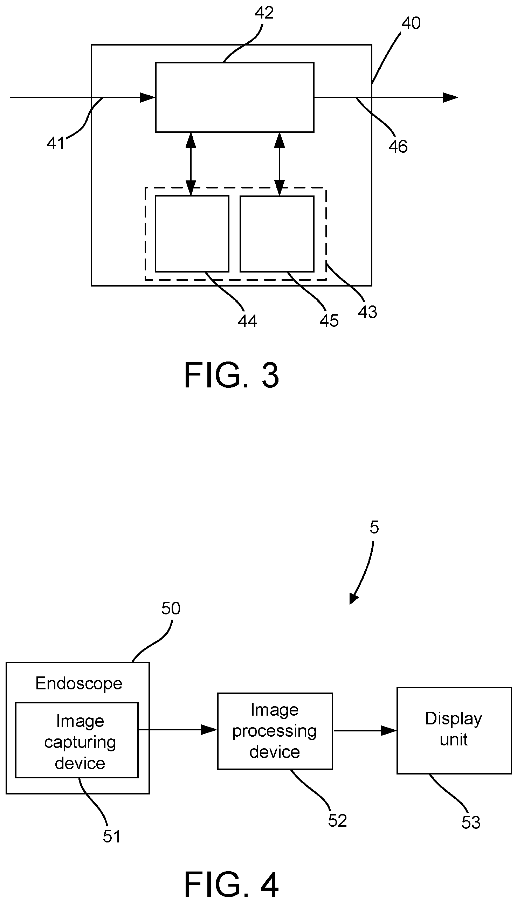

FIG. 3 shows a schematic drawing of an image processing device 40 for recognising previously observed locations during an endoscopic procedure according to an embodiment of the disclosure.

The image processing device 40 comprises a processing unit 42, which is operationally connectable 41 to an image capturing device of an endoscope. The processing unit 42 is configured to obtain a stream of images from the image capturing device of the endoscope during the endoscopic procedure. The processing unit 42 may be wired connectable to the image capturing device. As an example, the image processing device may comprise a connection port for operationally connecting the image capturing device of the endoscope to the processing unit 42. The connection port may further be used to provide power to the endoscope. Alternatively, the processing unit 42 may be wirelessly connectable to the image capturing device e.g. the image processing device 40 may comprise a wireless communication unit (not shown) configured to receive images from the image capturing device. The processing unit 42 is further configured to, during the endoscopic procedure, build a database 44 of previously observed locations based on images of the stream of images. The database 44 is stored in a memory 43 of the image processing device 40. In other embodiments, the database may be stored in an external memory and/or an internal memory of a memory device (not shown), to which the processing unit may be connectable, e.g. by a wired and/or a wireless connection. Alternatively or additionally, the database may be stored on a server accessible to the processing unit 42 by means of a wired and/or wireless connection.

The processing unit 42 is further configured to continuously compare images of the stream of images with the database 44 of previously observed locations to determine if an image of the stream of images is recorded from a previously observed location.

The processing unit 42 is configured to compare the images of the stream of images with the database of previously observed locations by providing the images to a machine learning data architecture 45 trained to determine if an image is recorded from a previously observed location. As an example, the machine learning data architecture 45 is stored in the memory 43. In other embodiments, the machine learning data architecture may be stored in an external memory and/or an internal memory of a memory device (not shown), to which the processing unit may be connectable, e.g. by a wired and/or a wireless connection.

The processing unit 42 is furthermore configured to output 46 an output signal indicating and/or comprising information regarding whether the image is determined to be recorded from a previously observed location. The output signal may be provided to a display unit (not shown).

FIG. 4 shows a schematic drawing of an endoscope system 5 according to an embodiment of the disclosure. The endoscope system 5 comprises an endoscope 50, an image processing device 52 having a processing unit. The endoscope 50 has an image capturing device 51 and the processing unit of the image processing device 52 is operationally connectable to the image capturing device of the endoscope 51. In this embodiment, the image processing device 52 is operationally connectable to a display unit 53. In other embodiments, the image processing device 52 is integrated in the display unit 53. In this embodiment, the image processing device 52 is configured to obtaining a stream of images from the image capturing device 51 of the endoscope 50 during the endoscopic procedure;
during the endoscopic procedure, building a database of previously observed locations based on images of the stream of images;
continuously comparing images of the stream of images with the database of previously observed locations to determine if an image of the stream of images is recorded from a previously observed location.

The image processing device 52 may be similar and/or identical to the image processing device 40 described with respect to FIG. 4. Alternatively or additionally, the display unit 53 may be similar and/or identical to the display unit described with respect to FIG. 1b.

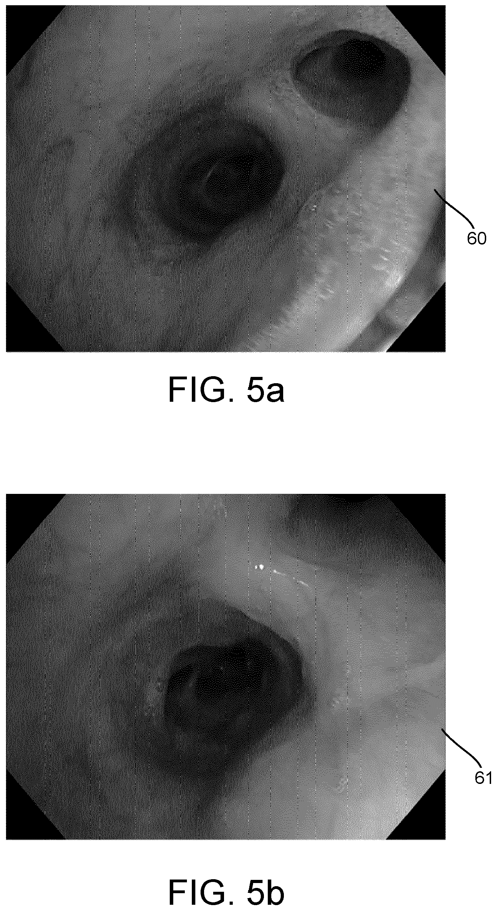

FIG. 5a shows a view of an image 60 based on which a database entry is generated in a method according to an embodiment of the disclosure.

The view of the image 60 is obtained by an image capturing device of an endoscope during a bronchoscopy. The view of the image 60 illustrates a furcation in the airways, i.e. a furcation of the trachea into a right and left main bronchus. Based on the image 60, an entry is generated in a database (not shown), such as the database 44 of the image processing device 4 and/or during step 32 of method 3. In some embodiments, the location at which the image 60 is obtained, i.e. at or near the furcation of the trachea into a right and left main bronchus, is determined and potentially stored in the database.

The database entry may comprise image 60 or a dimensionally reduced version thereof.

FIG. 5b shows a view of an image 61 which is compared with a database of previously observed locations in a method according to an embodiment of the disclosure.

The image 61 is an image from a stream of images obtained by an image capturing device of an endoscope during the bronchoscopy. The image 61 is compared with the database, such as by the processing unit 42 of the image processing device 4 and/or during step 33 of method 3. The image 61 is compared with the database entry based on image 60 and it is determined that the image 61 is recorded at the previously visited location, such as at or around the location, at which image 60 was also recorded. The image 61 may be compared with image 60, where this is stored in the database. In other embodiment, a dimensionally reduced version of the image 61 may be compared with a database entry based on image 60, such as a dimensionally reduced version of image 60.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A method of recognising previously observed locations during an endoscopic procedure comprising:
obtaining a stream of images from an image capturing device of an endoscope during the endoscopic procedure;
during the endoscopic procedure, building a database of previously observed locations based on images of the stream of images;
continuously comparing images of the stream of images with the database of previously observed locations to determine if an image of the stream of images is recorded from a previously observed location.

2. The method according to claim 1, wherein the comparing comprises reducing a dimensionality of the images of the stream of images and comparing the images of reduced dimensionality with the database.

3. The method according to any of the preceding claims, wherein the step of building the database comprises determining whether a predetermined position has been reached, wherein each previously observed location corresponds to a predetermined position and, where it is determined that the predetermined position has been reached, creating an entry in the database based on one or more images of the image stream.

4. The method according to claim 3, wherein the determination whether a predetermined position has been reached comprises continuously analysing the recorded images of the stream of recorded images using a first machine learning data architecture, the first machine learning data architecture being trained to determine a set of anatomic reference positions, to determine if an anatomic reference position of a subset of anatomic reference positions, from the set of anatomic reference positions, has been reached.

5. The method according to any one of the preceding claims, wherein building the database comprises evaluating a quality of an image of the image stream for use in the database and, in response to evaluating the quality to be above a predetermined threshold quality, generating a database entry based on the image.

6. The method according to any one of the preceding claims, wherein building the database comprises generating a database entry further based on one or more of an estimated endoscope location and an image smoothness.

7. The method according to any one of the preceding claims, wherein building the database comprises generating a database entry comprising a plurality of images.

8. The method according to any one of the preceding claims wherein building the database comprises generating a database entry, wherein the database entry is created based on a series of images and wherein the comparing comprises comparing a series of images from the stream of images with the database entry.

9. The method according to any one of the preceding claims, wherein the endoscopic procedure is a bronchoscopic procedure.

10. An image processing device for recognising previously observed locations during an endoscopic procedure, said image processing device comprising a processing unit operationally connectable to an image capturing device of an endoscope, wherein the processing unit is configured to perform the method according to any one of claims 1-9.

11. A display unit for displaying images obtained by an image capturing device of an endoscope, wherein the display unit comprises an image processing device according to claim 10.

12. An endoscope system comprising an endoscope and an image processing device according to claim 10, wherein the endoscope has an image capturing device and the processing unit of the image processing device is operationally connectable to the image capturing device of the endoscope.

13. The endoscope system according to claim 12 further comprising a display unit, the display unit being operationally connectable to the image processing device.

14. An endoscope system according to claim 12, wherein the image processing device forms part of a display unit according to claim 11.

15. A computer program product comprising program code means adapted to cause a data processing system to perform the steps of the method according to any one of claims 1-9, when said program code means are executed on the data processing system.

16. The computer program product according to claim 15, wherein said computer program product comprises a non-transitory computer-readable medium having stored thereon the program code means.
